# EUROPEAN PATENT SPECIFICATION

(11) **EP 1 176 876 B1**
(45) Date of publication and mention of the grant of the patent: **14.01.2004**
(21) Application number: 00927540.5
(22) Date of filing: 08.05.2000
(51) Int. Cl.: A23K 1/18

(54) **PIGMENT**
PIGMENTVERSTAERKER
PIGMENT

(30) Priority: 07.05.1999 GB 9910461
(43) Date of publication of application: 06.02.2002
(73) Proprietor: Ewos Limited, Livingston, EH54 5DB (GB)
(72) Inventor: BUTTLE, Louise, Georgina, Edinburgh EH11 1SB (GB)
(74) Representative: McNally, Roisin
(86) International application number: PCT/GB2000/001753
(87) International publication number: WO 2000/067591

(56) References cited:
- US-A- 5 688 500
- IWAHASHI, M., AND WAKUI, H.: "Intensification of Color of Fancy Carp with Diet" BULLETIN OF THE JAPANESE SOCIETY OF SCIENTIFIC FISHERIES, vol. 42, no. 12, 1976, pages 1339-1344, XP000939130
- TYCZKOWSI, J. K., SCHAEFFER, J. L., AND HAMILTON, P. B.: "Influence of Dietary Lipids on Pigmentation of Young Chickens" POULTRY SCIENCE, vol. 68, no. 9, 1989, pages 1246-1254, XP000939108 cited in the application
- Souci, Fachmann & Kraut: Food composition and Nutrition Tables 1989/90, Wissenschfliche Verlagsgesellschaft mbH, p. 127 - 128 & 133 - 134

## Description

This invention relates to a method of altering and improving the pigmentation of fish flesh. More specifically the invention discloses a method of enhancing the uptake of pigments by fish, such that there is a resultant increase in the level of pigmentation of the fish flesh.

An increase in market competition, coupled with the widespread availability of fish in supermarkets has led to an increase in the demand for, and quality of fish products.

Mass production of salmonids such as salmon and trout is required to meet current consumer demand which exceeds that which can be met by fish produced in a natural, wild environment.

Variations exist between fish produced naturally and those which are specifically farmed to meet consumer demand. One particular difference is a variation in the colour of the flesh of the fish.

The characteristic pink colour of salmonid flesh is a result of the deposition of naturally occurring carotenoid pigments. Obtaining pigmentation in farmed salmonids which is similar to that seen in wild salmon is a vital aspect of feed production. Currently fish feeds contain either or both of the main synthetic pigments which are commercially available; astaxanthin (Ax) and canthaxanthin (Cx). In several instances, pigment costs contribute to 10-15% of the total cost of fish feed production, compared to pigment flesh deposition efficiencies which rarely exceed 15%. Since fish feed comprises around 50% of the total production costs of farmed fish, 5-7.5% of overall fish production cost can be attributed to the cost of pigment.

Flesh colour is one of the main criteria used by the consumer when considering the purchase of salmonids and accordingly it is considered by the consumer that the stronger red colour of the flesh which is seen in wild fish is more desirable.

In an effort to achieve the flesh colour characteristics exhibited by wild fish, pigments are added to the feed given to farmed fish with the intent that the uptake, by ingestion of the pigment, will lead to an associated change in the colour of the flesh.

Pigments are specifically selected such that their uptake will lead to the flesh becoming a red colour. Examples of pigments which induce this are canthaxanthin and astaxanthin.

Such processes are not limited to fish, as the modification of the colour of naturally produced foodstuffs is a current trend. The aesthetic appeal of the product to the end consumer is enhanced through modification of the feed ingredients to influence the characteristics of the final product, in particular the colour of the product.

An example of such a process currently known in the art is the alteration of the feed ingredients given to chickens and hens, such that the colour of the yolk of the eggs that are produced is modified from that of the natural colour. The result of this process is that the product has an increased aesthetic appeal which in turn leads to a greater desirability for consumer consumption.

It is desirable for the flesh of the fish to be altered to any specific requirement which may be set. One such method of altering the fish flesh colour would be through the introduction of pigments into the diet.

It is an object of the present invention to provide a method for improving the uptake of pigments which are provided in the diet to influence the colour of fish flesh.

According to the present invention there is provided, a method of enhancing the uptake of pigment by fish, the method comprising feeding fish with cholesterol.

Fish are fed cholesterol and pigment.

The cholesterol and pigment are a component of the fish feed.

The cholesterol is provided in the same medium as the pigment.

The cholesterol is added to the fish feed at a level of between 0.1 to 5 percent.

Most preferably the cholesterol is added to the feed at a level of between 1 to 3 percent.

Preferably, the pigment will lead to a change in flesh colour, plasma pigment levels and flesh pigment levels of fish.

Preferably the method can be used on Atlantic salmon, rainbow trout, other salmonid species, tropical fish.

Alternatively, the method may be used on any other fish species where the pigment colour of either the flesh or skin is important.

The invention also provides fish feed comprising cholesterol and pigment.

The invention also provides the use of cholesterol to enhance uptake of pigment to fish flesh.

Deposition of carotenoids in the fish flesh occurs as a result of several processes; absorption of pigments in the digestive tract, transport of pigment in the blood, retention in the flesh and metabolism of carotenoids. These processes are further detailed below;

### 1. Absorption

Pigment absorption across the intestinal wall, from the digestive tract to the blood is the initial phase in pigment retention by muscle in salmonids. Since carotenoids are lipid soluble they are most likely to be emulsified in a mixed micelle together with bile, other lipid components, prolipase and lipase during absorption across the gastrointestinal tract (Leger 1985).

The rate of pigment absorption to the blood, following ingestion is fairly slow, compared to the absorption of essential fatty acids and amino acids (Storebakken & No, 1992). Maximum plasma Ax and Cx levels occurred at 24 hours following the force feeding of rainbow trout with a 500mg dose of Ax (March *et al* 1990, Choubert *et al* 1987), carotenoid levels first being detected at 3 hours following feeding.

### 2. Blood Transport

Ax and Cx are largely transported by the high density lipoprotein fraction of plasma in immature rainbow trout (Choubert *et al,* 1992, 1994). Generally in immature fish, flesh is a major tissue for storing carotenoids (No and Storebakken, 1992).

### 3. Deposition/Flesh Retention

Deposition efficiency of dietary carotenoids in salmonid flesh is in the range 1-18% (Torrissen *et al,* 1989). Astaxanthin retention efficiency of Rainbow trout was found to be significantly higher than that for canthaxanthin; 11.4% and 7.1% respectively (Storebakken & Choubert 1991). Dose response studies show that the efficiency of deposition declines with increase in dietary level (50 mg/kg in Rainbow trout, Storebakken & No 1992: 10 mg/kg in Rainbow trout, Crampton 1995).

Differences in flesh retention efficiencies between species have been observed, and it is known that rainbow trout (RBT) pigment has a greater efficiency than Atlantic salmon (ATS).

In the muscle of wild salmon *(Oncorhynchus keta, O. nerka & O. kisutch)* astaxanthin (90% in the free form) and canthaxanthin are bound to actomyosin, probably *via* weak hydrophobic bonds (Henmi *et al* 1987). Astaxanthin forms two hydrogen bonds per one β ionone ring, and combines more strongly than canthaxanthin, due to its hydroxyl group (see Henmi *et al* 1989). The actomyosin of salmon muscle can associate with many kinds of carotenoids and lipids, implying that specificity of binding sites is not a problem, with variation between molecule types relating to the bond strength (Henmi *et al* 1989). In the skin the majority of astaxanthin is found in the ester form (Torrissen *et al* 1989).

### 4 Metabolism

Carotenoids and their metabolites have been detected in the tissues of fish up to 96 hours following ingestion of a labelled meal (Guillou *et al* 1992). Schiedt *et al* (1989) found idoxanthin to be a metabolite of astaxanthin in ATS flesh - higher levels of idoxanthin were found in experimental fish in indoor tanks of farmed fish in open cages, which suggests that this may be stress related (Al-Khalifa & Simpson 1988).
Metabolites of carotenoids are found mainly in the skin, but also in the flesh of sexually maturing fish (Hata & Hata 1975; Scheidt et al 1985).
Schiedt et al (1985) evidenced that astaxanthin could be a precursor to vitamin A in vitamin A-depleted fish. Results of Al-Khalifa & Simpson (1988) showed that astaxanthin was converted to zeaxanthin, but in Vitamin A sufficient RBT it was not converted to Vitamin A₁ and A₂ although fish fed a diet lacking in vitamin A and carotenoids for 30 days and then force fed astaxanthin showed an increase in vitamin A.

This document suggests that the incorporation of a pigment into the diet, either in combination with the foodstuffs directly, or as a separate entity introduced into the diet such that it will enter the same metabolic pathways as other ingested and absorbed nutrients will also end up as a constituent of the flesh.

The pigment will lead to a change in the colour of the flesh into which it is incorporated.

The incorporation of the pigment into the flesh may not be efficient and this document identifies a method of enhancing such pigment uptake.

The benefits of a method by which the uptake of pigment by the fish is enhanced are wide-ranging and cover both biological and economical aspects.

The addition of pigments such as astaxanthin and canthaxanthin can have a drastic economical effect on the cost of producing fish feed pellets, due to the expensive cost of the pigments. As such a more efficient mechanism of producing the effects of astaxanthin and canthaxanthin may lead to a reduction in the amount that needs to be added to the feed initially.

Some research has indicated that lipid levels improve pigment absorption for example Choubert et al (1991) found that digestibility of Cx was greatly improved when using a lipid rich diet (14% lipid/dry matter cf 4% lipid/dry matter). However, at commercially realistic levels of lipid (24-35%) no differences were found in flesh deposition efficiencies of RBT (Crampton, 1996 internal data).

Bjerking et al (1997) found no significant effect of dietary protein sources (eg a fish meal against a full fat soyabean meal) in Atlantic salmon fed for 9.5 months, on the amount of astaxanthin in the muscle or the visual colour score.

A study of biological utilisation of carotenoids (α and β-carotene) in rats found that bioavailability of naturally occurring carotenoids was greater than the crystalline form (Tee *et al* 1996). In addition, Bierer *et al* (1995) found that in pre-ruminant calves higher serum levels of carotenoids were observed when given commercial beadlet sources compared to crystalline sources.

A Patent Application in the name of Finnfeeds International Limited, (WO 9818345 A) claims that the absorption in fish, crustaceans and healthy poultry of pigments present in a non-viscous animal feed is promoted by the presence of a carbohydrase and protease enzyme.

In studies with young chickens Tyczkowski et al (1989) found that lipids, long chain saturated fatty acids (myristic, palmitic, stearic) and triglyceride, tristearin, promoted minimal absorption of lutein, whereas the short chain saturated lauric acid promoted the highest absorption. Screening trials have been conducted to try and identify enhancers of pigment uptake that may be added to the feed to improve pigmentation.

Iwahashi et al (1976) found that the addition of cholesterol to the diets of lancy carp had no effect on the accumulation of carotenoids.

Cholesterol was tested as one of the enhancers, due to its properties as an auxiliary agent in uptake. Cholesterol is an important lipid in some membranes and the plasma membranes of eucaryotic cells are usually rich in cholesterol, this steroid also modulates the fluidity of eukaryotic membranes. Due to these properties cholesterol was identified as a substance with the potential to enhance pigment uptake.

Cholesterol is added to the feedstuffs either by means of extruder or via flex coating with a level of addition between 0.5% and 5%. Natural levels of cholesterol in commercial fish feeds (derived mainly from fish oil) are up to approximately 0.5%.

In the same way that the pigmentation of salmonid flesh, eg Atlantic salmon, Coho salmon, Chinook salmon, Rainbow trout, Artic charr, is important to the consumer, the skin colour of tropical fishes is also an important quality characteristic. In this way the feedstuffs of the above-mentioned species could be modified in a similar way to effect the colour of flesh and skin, in addition to flesh pigment concentration (mg/kg) .

A series of experiments are described below which look at whether there is an enhancement of pigment uptake in the plasma and flesh when the fish feed is supplemented with varying levels of cholesterol.

### Experiment 1

Atlantic salmon of mean weight 120g, were fed for a period of 72 hours on one of two diets;
Diet 1: contains approximately 40ppm of canthaxanthin (Cx)
Diet 2: contains 40ppm canthaxanthin (Cx) plus 0.48% (total feed, 3% of the lipid coating phase) of cholesterol.

Cx and cholesterol were added in the coating.

After feeding, fish were bled via the caudal vein, using heparanised vacutainers, the blood samples were centrifuged on site and the plasma removed and stored frozen. Plasma pigment levels were analysed on HPLC.

Analysis results for the feeds are shown in Table 1.

**TABLE 1**

| Cholesterol levels in feeds | | |
|---|---|---|
| **Fish Feed** | **Cholesterol addition** | **% Cholesterol in feed** |
| Uncoated feed | 0 | 0.32 |
| coated feed | 0 | 0.27 |
| coated feed | 0.48% | 0.53 |
| coated feed | 0 | 0.28 |
| coated feed | 0.48% | 0.54 |

**TABLE 2**

| Plasma results for the treatments | | | | | |
|---|---|---|---|---|---|
| Replicate | Feed No. | Treatment | Cholesterol level % feed | Feed Cx mg/kg | Plasma Cx µg/ml mean (STD) |
| 1 | 1 | CR | 0 | 40.51 | 0.94 (0.5) 0.64 (0.4) |
| 2 | | | | | |
| 1 | 2 | CR + Cholesterol | 0.48 | 45.67 | 1.42 (0.57) 1.45 (0.96) |
| 2 | | | | | |
| significant differences were observed *p*<0.05 (T-test) | | | | | |
| CR = carophyll red (commercial formulation of Canthaxanthin) | | | | | |

The results shown in Table 2 clearly show that the fish fed with cholesterol in feed (Diet 2) show almost a 50% increase in the plasma Cx level compared to the control feed. Additionally this trend is apparent in both replicates of the experiments.

### Experiment 2

Further experimentation investigating the effect of supplementing dietary cholesterol on astaxanthin and canthaxanthin flesh and plasma levels is described below.

Atlantic salmon of an initial weight of 0.136Kg were grown for four months in 12 x 3m tanks, supplied with seawater. Fish were fed feeds containing varying levels of cholesterol. (Sigma, C8503, approximately 95%). Cholesterol was mixed thoroughly with the oil source and added in the coating (in addition to the pigment preparations of astaxanthin (Ax) and canthaxanthin (Cx)). Soya oil was selected as an oil naturally low in cholesterol and this was the basis for using fish foods with different oil source types and the mixture of oils. Details of dietary cholesterol levels and astaxanthin, canthaxanthin concentrations are given in Table 3.

At the end of the trial, the fish were weighed, they had their blood removed for pigment analysis, and flesh samples scored with respect to colour and later analysed for pigment.

The results of the experiments are further described with reference to the figures wherein;
Figure 1 shows the effect of feed cholesterol level on flesh pigment (Cx) concentration (mg/kg), with each point on the figure representing the mean value of each of the tanks,
Figure 2 shows the levels of the pigment canthaxanthin in fish flesh, when cholesterol is added to the feed effect of feed cholesterol level (mg/kg), wherein each point is the mean value of each tank (the 5 pooled analyses),
Figure 3 shows the effect of feed cholesterol level on fillet SalmoFan scores and,

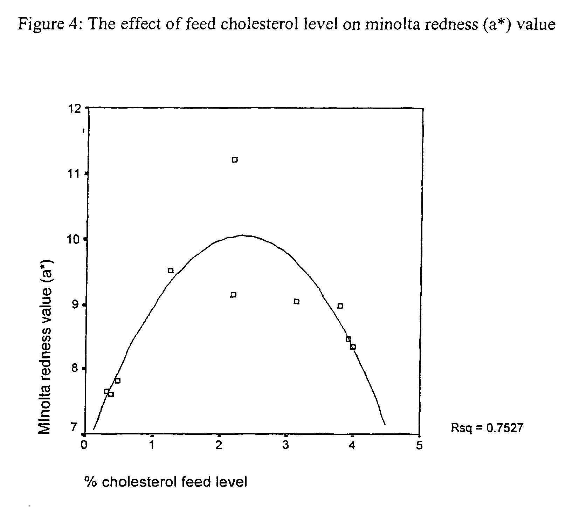

Figure 4 shows the effect of feed cholesterol level on Minolta redness (a* value).

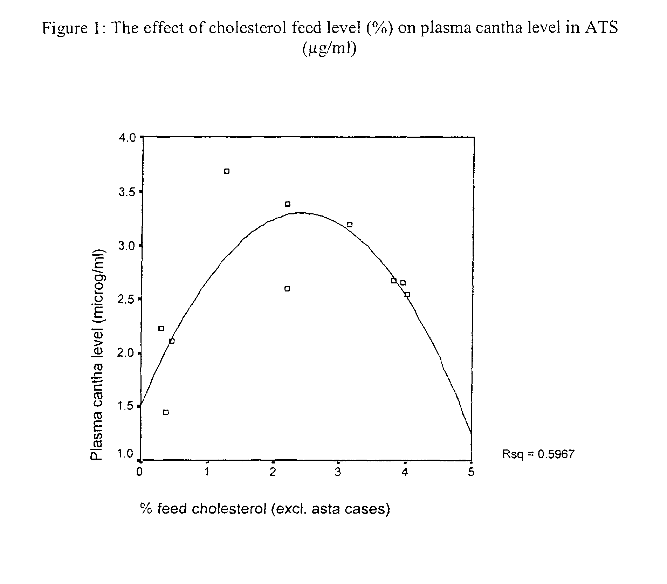

Figure 1 shows that the plasma pigment levels show an increase which is correlated with an increase in dietary cholesterol to approximately 1-3%. Any further addition of cholesterol to the feed after this level shows a decline in pigment plasma concentration. Maximum canthaxanthin plasma level values were observed at 3.6 µg/ml (1% feed cholesterol added), compared to control values of 1.5-2 µg/ml.

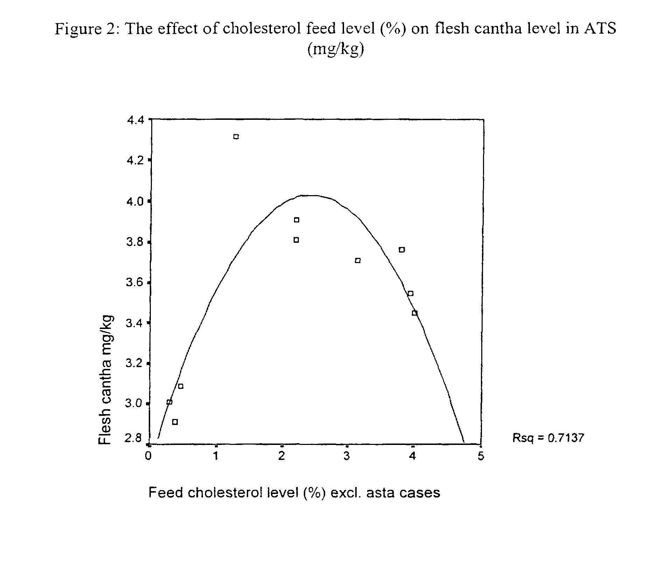

Figure 2 shows the effects on the levels of the pigment canthaxanthin in fish flesh, when cholesterol is added to the feed. Maximum flesh pigment levels of around 4.3 mg/kg were observed in the group of fish fed canthaxanthin (which have a feed cholesterol level of 1.3%), compared to levels of around 3 mg/kg in the control groups. In this size of Atlantic salmon, dietary cholesterol levels (1-4%) caused an increase in flesh pigment levels, this increase ranged from 0.4 mg/kg to 1.3 mg/kg.

Astaxanthin flesh levels were 2.32 mg/kg for the control fish and 2.76 mg/kg for the fish with a 3.8% cholesterol supplement to their feed. Astaxanthin plasma levels were 0.62 µg/ml for the control and 0.65 µg/ml for the fish whose feed was supplemented with 3.8% cholesterol.

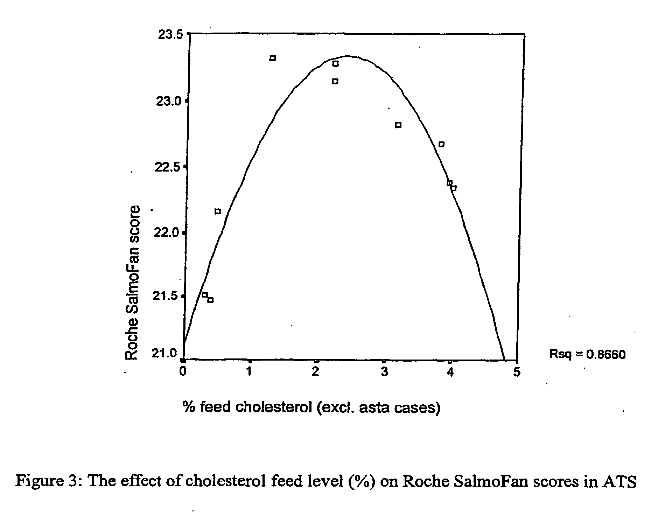

The effect of increasing the overall percentage of cholesterol in feed with respect to the resultant colour of the flesh is shown in Figure 3. The colour is scored using a Roche SalmoFan™ score. This is a tool used in the industry to score fish colour, which was developed by Hoffman la Roche Ltd. The test comprises a set of different coloured plastic mini sheets which combine to form a scale that ranges from 20 (pale pink) - 34 (dark red), which are used to compare against the colour of the fish flesh and score them accordingly.

Maximum SalmoFan scores were observed with the tanks of fish fed 1-2% cholesterol in the feeds. At higher feed cholesterol levels, a decrease in Roche SalmoFan™ scores was observed (Figure 3). The difference in flesh colour shown by the fish fed diets which had been supplemented with between 1-2% cholesterol related to 1-1.5 points advantage on the Roche SalmoFan™ test.

Further analysis of the flesh colour was carried out using the Minolta evaluation technique. Minolta redness values are shown in Figure 2. The Minolta is a tristimulus colorimeter (Minolta Chroma Meter CR300, Minolta, Japan) which has an 8mm head and a D65 light source. Readings were given for Lightness (L*), Redness (a*) and yellowness (b*), the "L a b" system according to International Commission on Illumination (CIE, 1986). Maximum redness values were observed in the fish fed which been supplemented with between 1-2% of cholesterol, although the pattern was not as clear as that exhibited by the results of the SalmoFan™ scoring system.

In conclusion, although the experiments described herein show that the addition of cholesterol to a fish feed can result in an increase in pigment levels in the plasma and flesh, the results indicate that the optimum uptake of pigment by the plasma and deposition in the flesh occurs when the feed contains a cholesterol level of between 1 to 3% of total feed weight.

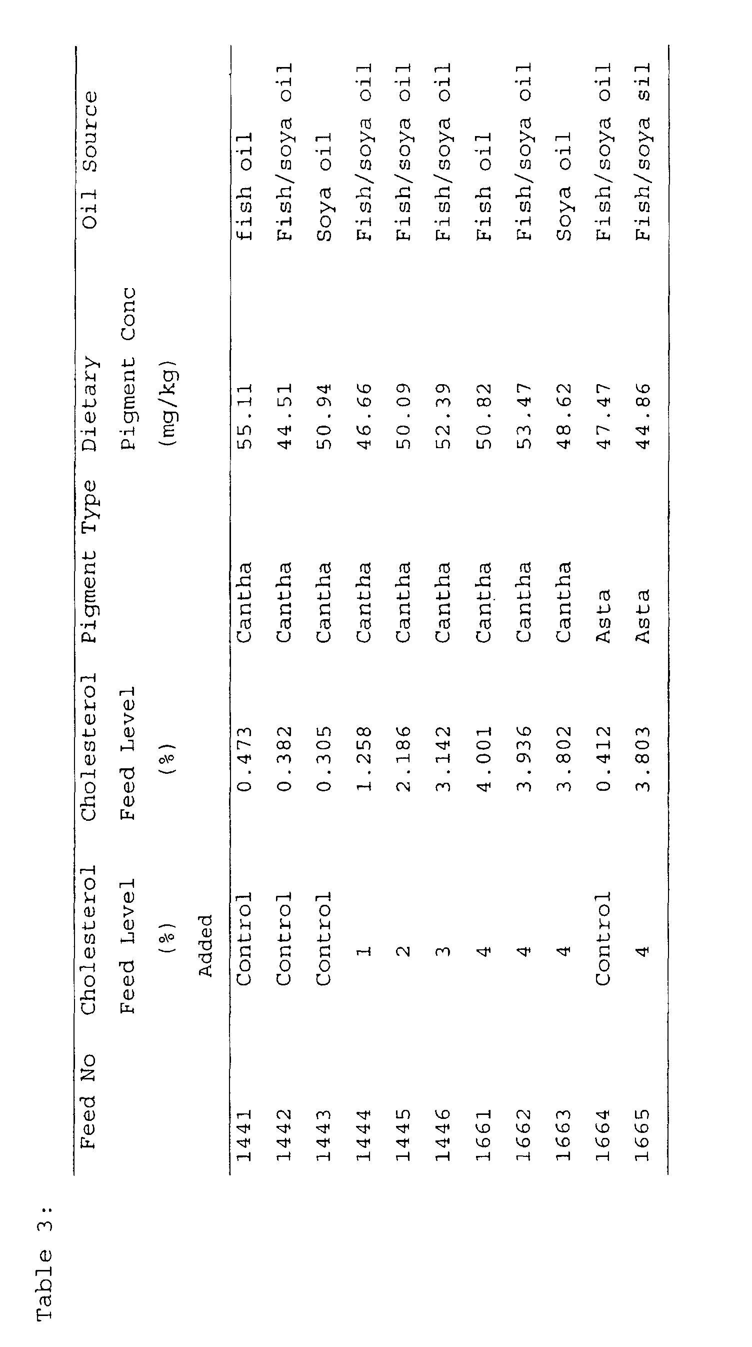

## Claims

1. A method of enhancing the uptake of pigment by fish to induce a change in the pigmentation of the flesh, said method comprising the step of feeding fish with a feed containing pigment and 0.1-5% cholesterol by weight.

2. A method as claimed in claim 1 wherein cholesterol comprises between 1-4% of the feed.

3. A method as claimed in claim 1 wherein cholesterol comprises between 1-3% of the feed.

4. Use of a fish feed containing pigment in the colouration of fish flesh wherein the feed also contains cholesterol at a level of between 0.1-5% of the total feed.

5. Use of a fish feed as claimed in claim 4 wherein cholesterol comprises 1-4% of the feed.

6. Use of a fish feed as claimed in claim 4 wherein cholesterol comprises 1-3% of the feed.

7. Use of a fish feed as claimed in claims 4 to 6 in the feeding of Atlantic salmon, rainbow trout, tropical fish or any other fish species where the colour of the flesh is important, to effect a change in flesh colour.

8. The use of cholesterol in a fish feed, to enhance the uptake of pigment to effect an alteration in the colour of the fish flesh, wherein the level of cholesterol is between 0.1-5% of the total weight of the feed.

## Patentansprüche

1. Ein Verfahren zum Verbessern der Pigmentaufnahme bei Fischen, um eine Änderung bei der Pigmentation des Fleischs zu bewirken, wobei das Verfahren den Schritt des Fütterns von Fischen mit einem Futter beinhaltet, das Pigment und 0,1 - 5 Gew.% Cholesterin enthält.

2. Verfahren gemäß Anspruch 1, wobei das Cholesterin zwischen 1 - 4 % des Futters beinhaltet.

3. Verfahren gemäß Anspruch 1, wobei das Cholesterin zwischen 1 - 3 % des Futters beinhaltet.

4. Verwendung eines Pigment enthaltenden Fischfutters bei der Färbung von Fischfleisch, wobei das Futter auch Cholesterin in Höhe von zwischen 0,1 - 5 % des gesamten Futters enthält.

5. Verwendung eines Fischfutters gemäß Anspruch 4, wobei das Cholesterin 1 - 4 % des Futters beinhaltet.

6. Verwendung eines Fischfutters gemäß Anspruch 4, wobei das Cholesterin 1 - 3% des Futters beinhaltet.

7. Verwendung eines Fischfutters gemäß Ansprüchen 4 bis 6 beim Füttern von Atlantischem Lachs, Regenbogenforelle, tropischem Fisch oder jeder anderen Fischart, bei der die Farbe des Fleischs wichtig ist, um eine Änderung bei der Fleischfarbe zu bewirken.

8. Verwendung von Cholesterin in einem Fischfutter zum Verbessern der Pigmentaufnahme, um eine Änderung bei der Farbe des Fischfleischs zu bewirken, wobei der Gehalt an Cholesterin zwischen 0,1 - 5 % des Gesamtgewichts des Futters liegt.

## Revendications

1. Un procédé d'amélioration de l'absorption de pigments chez des poissons pour entraîner un changement de la pigmentation de la chair, ledit procédé comportant l'étape de nourrir des poissons avec un aliment contenant des pigments et du cholestérol à 0,1 à 5 % en poids.

2. Un procédé tel que revendiqué dans la revendication 1 dans lequel le cholestérol compose entre 1 à 4 % de l'aliment.

3. Un procédé tel que revendiqué dans la revendication 1 dans lequel le cholestérol compose entre 1 à 3 % de l'aliment.

4. Utilisation d'un aliment pour poissons contenant des pigments pour colorer la chair de poisson dans laquelle l'aliment contient également du cholestérol à un niveau compris entre 0,1 à 5 % de l'aliment total.

5. Utilisation d'un aliment pour poissons telle que revendiquée dans la revendication 4 dans laquelle le cholestérol compose 1 à 4 % de l'aliment.

6. Utilisation d'un aliment pour poissons tette que revendiquée dans la revendication 4 dans laquelle le cholestérol compose 1 à 3 % de l'aliment.

7. Utilisation d'un aliment pour poissons telle que revendiquée dans les revendications 4 à 6 pour nourrir le saumon de l'Atlantique, la truite arc-en-ciel, les poissons tropicaux, ou toute autre espèce de poisson pour laquelle la couleur de la chair est importante, afin d'avoir comme effet un changement dans la couleur de la chair.

8. L'utilisation du cholestérol dans un aliment pour poissons pour améliorer l'absorption de pigments pour avoir comme effet une altération dans la couleur de la chair de poisson, dans laquelle le niveau de cholestérol est compris entre 0,1 et 5 % du poids total de l'aliment.
